# EUROPEAN PATENT SPECIFICATION

(11) **EP 3 725 573 B1**
(45) Date of publication and mention of the grant of the patent: **08.06.2022**
(21) Application number: 20167084.1
(22) Date of filing: 31.03.2020
(51) Int. Cl.: B60G 11/16, F16F 1/12

(54) **COIL SPRING AND BONDED PAD FOR THE CAR SUSPENSION SYSTEM COIL SPRING AND METHOD OF MANUFACTURING THE SAME**
SCHRAUBENFEDER UND GEKLEBTE FEDERUNTERLAGE FÜR DIE SCHRAUBENFEDER EINES KRAFTFAHRZEUGAUFHÄNGUNGSSYSTEMS UND VERFAHREN ZU DESSEN HERSTELLUNG
RESSORT HÉLICOIDAL ET SUPPORT COLLÉ POUR LE RESSORT HÉLICOIDAL DE SYSTÈME DE SUSPENSION DE VÉHICULE ET SON PROCÉDÉ DE FABRICATION

(30) Priority: 19.04.2019 KR 20190046089
(43) Date of publication of application: 21.10.2020
(73) Proprietor: Daewon Kang Up Co., Ltd., Cheonan-si, Chungcheongnam-do 31042 (KR)
(72) Inventor: Lim, Man-Seung, 16505 Suwon-si (KR); Park, Ik Soo, 07599 Seoul (KR); Yi, Jae Shik, 07279 Seoul (KR); Kim, Ki Yong, 15268 Ansan-si (KR)
(74) Representative: Schneiders & Behrendt Bochum

(56) References cited:
- DE-A1-102011 002 065
- DE-U1-202015 100 435
- JP-A- 2011 069 446
- KR-B1- 101 382 320
- US-A1- 2017 197 483
- US-A1- 2018 100 556

## Description

### BACKGROUND

### 1. Field of the Invention

The present invention relates to a pad installed in a car suspension system so as to prevent damage to a coil spring and a strut seat, and more specifically, to a bonded pad for a car suspension system coil spring which is manufactured by bonding a coil spring and a pad to effectively prevent foreign materials from being introduced between the coil spring and the pad and in which sections having different strengths are formed so as to improve dynamic characteristics and adhesion durability of the bonded pad and a method of manufacturing the same.

### 2. Discussion of Related Art

Generally, suspension systems are installed on cars to protect chassis or drive shaft connecting units from impacts transmitted from unevenness of road surfaces during travel and to improve ride comfort, and springs, such as coil springs, leaf springs, and air springs, are applied to the suspension systems according to weights, uses, and the like of the cars so as to absorb the impacts of the road surfaces.

Among them, the coil spring is used in a sedan because ride comfort of the coil spring is superior to that of other springs due to a linear characteristic thereof and is manufactured of a metal material such as steel to secure requirements, such as sufficient strength and toughness, for properties of an operating environment in which an impact or load is repeatedly applied to the coil spring.

Suspensions to which the coil spring is applied is classified as double wishbone type suspensions, MacPherson strut type suspensions, and multilink type suspensions according to a connection method of a suspension arm and has a structure in which the coil spring is directly exposed to the outside and easily corroded.

When the corrosion occurs on the coil spring, an oxide film is formed on the coil spring, behavior characteristics of the coil spring are changed, and thus performance of the coil spring may be degraded, and when the corrosion is serious, brittleness of a coil spring steel is increased, and thus the corrosion may be a cause for the coil spring to break early. Accordingly, a surface treatment such as an anticorrosive treatment and a painting treatment is performed on a surface of the coil spring and a surface of the strut seat on which the coil spring is installed.

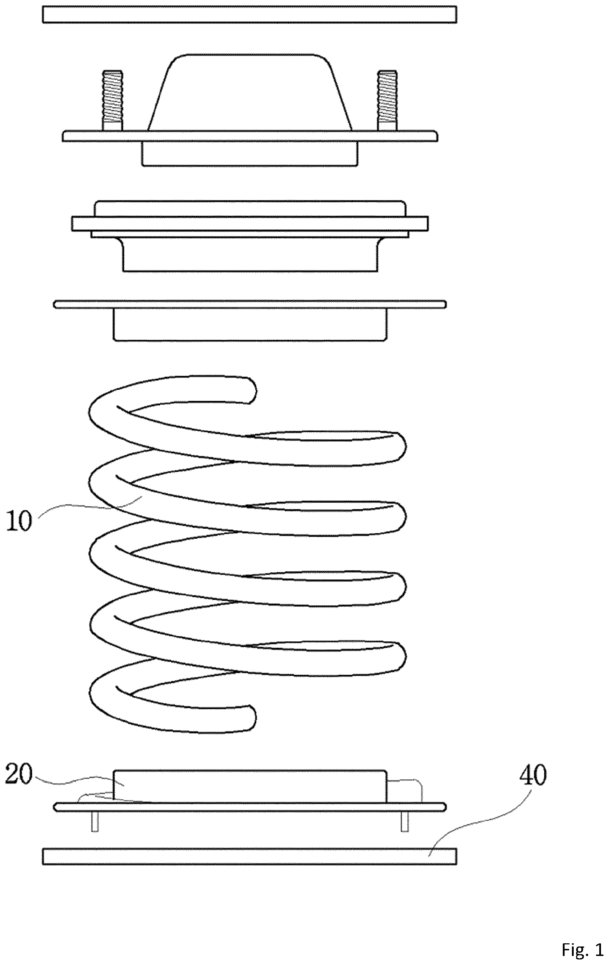

As illustrated in FIG. 1, a pad formed of an elastic material such as rubber is installed between a strut seat and a coil spring to prevent damage to the coil spring or the strut seat due to direct contact or friction which can be generated between the coil spring and the strut seat when a suspension system operates, and foreign materials on the road surface may be easily introduced between a contact portion of the pad and a contact portion of the coil spring due to a positional characteristic of the coil spring installed on a lower portion of a car chassis.

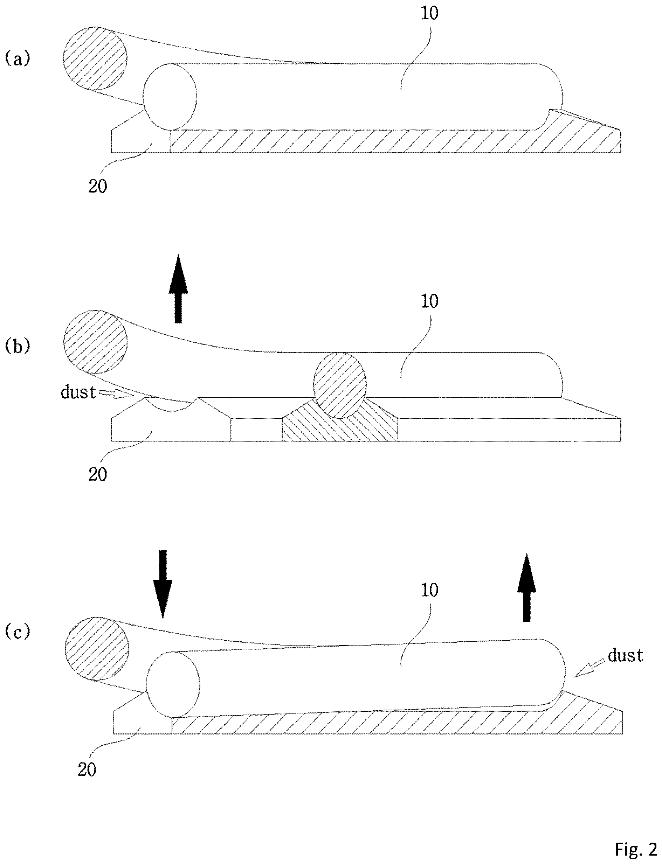

Particularly, as illustrated in FIG. 2, when the suspension system operates, compression or tension of the coil spring repeatedly occurs and a shape of the coil spring is changed, and when the shape of the coil spring is changed, a gap between a contact surface of the pad and a contact surface of the coil spring can be easily generated and foreign materials can be introduced into the gap.

When the coil spring is compressed in a state in which the foreign materials are introduced between the contact surface of the pad and the contact surface of the coil spring, the painted surface of the coil spring and the pad may be damaged. In addition, when the pad is damaged, buffering performance of the pad is reduced, impact absorption capability thereof is reduced, and the damage becomes a cause of noise generated by the suspension system. In addition, in a case in which the pad is seriously damaged, the coil spring and the strut seat are in direct contact with each other so that the painting surface of the coil spring and the painting surface of the strut seat are damaged.

Accordingly, when a suspension system operates, in order to prevent generation of a gap between a coil spring and a pad and introduction of foreign materials into the gap, a bonded pad was developed in which a contact surface of the coil spring and a contact surface of the pad (spring retainer of a related art) are bonded like a spring assembly of Korean Patent Publication No. 10-2016-0134558.

Such a bonded pad maintains a contact state of the bonded pad and the coil spring using an adhesive when an opening force is applied between the coil spring and the bonded pad so as to prevent introduction of the foreign materials, and in a case in which a hardness of the bonded pad is high, a surface pressure applied to the bonded pad from the coil spring is nonuniformly distributed, a concentrated load is applied to a specific portion of the bonded pad, the bonded pad is permanently deformed or damaged due to the concentrated load, performance of the bonded pad may be degraded, and dynamic characteristics of a car are degraded.

In addition, sufficient deformation required for maintaining the contact state of the bonded pad and the coil spring does not occur and the contact surfaces can be separated.

However, in a case in which the hardness of the bonded pad is low, deformation required for maintaining the contact state of the bonded pad and the coil spring may occur to prevent separation of the contact surfaces, but the contact surface of the bonded pad may be easily damaged due to a compression force applied from the coil spring.

In addition, when the coil spring is compressed, the bonded pad is excessively deformed due to a force applied in an outward direction perpendicular to a screw axis of the coil spring, foreign materials are introduced into a gap generated between a contact portion of the bonded pad and a contact portion of the strut seat due to the deformation, and thus there is a problem in that a painting surface of the strut seat and the bonded pad may be damaged.

In addition, a process of bonding the coil spring and the pad may be performed through a load application method in which a coil spring and a pad are bonded and a compressive force is applied to the coil spring and the pad to improve an adhesive force, or through a no-load method in which an adhesive force is not applied to a coil spring and a pad. In a case in which the coil spring and the pad are bonded through the no-load method, since an adhesive force and an adhesive durability lifespan are not sufficiently secured, a contact surface of the coil spring can be separated from a contact surface of the pad when the coil spring is repeatedly compressed and released.

However, in a case in which the coil spring and the pad are bonded through the load application method, a sufficient adhesive force may be secured, but the pad is compressed due to a pressure applied to the pad and is hardened, and thus there is a problem in that a change in dynamic characteristics, such as impact absorption performance and ride comfort, of the pad may occur.

### Related Art

### Patent Document

(Patent Document 0001) Korean Patent Publication No. 10-2016-0134558 (Published Nov 23, 2016)

Document DE 20 2015 100435 U1 discloses the preamble of claims 1 and 10.

### SUMMARY OF THE INVENTION

The present invention is directed to effectively prevent introduction of foreign materials and to improve dynamic characteristics of a bonded pad by satisfying a pad hardness simultaneously capable of maintaining an adhesive state of the bonded pad and a coil spring when the coil spring is released due to operation of a suspension system and capable of preventing excessive deformation of the bonded pad when the coil spring is compressed.

The present invention is also directed to prevent occurrence of a change in dynamic characteristics of a pad due to a compressing surface of a bonded pad being hardened when a coil spring and a pad are bonded by applying a load thereto.

According to an aspect of the present invention, in a coil spring and bonded pad for a car suspension system coil spring in which a coil spring seating portion includes a groove, which has the same shape as a shape of a surface of one side end of a coil spring such that the coil spring of a car suspension system is seated and a pad includes a support protruding along inner and outer circumferences of the coil spring seating portion to prevent the coil spring from being separated from the coil spring seating portion so as to prevent damage to the coil spring and generation of noise due to friction between the coil spring and a strut seat, the pad includes a low hardness layer formed along an entire periphery or a partial section of the periphery of the coil spring seating portion and a high hardness layer having a hardness higher than the low hardness layer and is fixedly bonded to the coil spring using adhesive layers formed on a contact surface of the coil spring seating portion and a contact surface of the coil spring.

A support panel having a higher strength and a lower density than the high hardness layer may be inserted into a boundary between the low hardness layer and the high hardness layer.

An outer or inner circumferential surface of the support panel may be bent in a direction toward the coil spring seating portion so that a cross section of the support panel has an "L" or "U" shape.

According to the invention, the pad includes a first high hardness section formed at a portion on which one side end portion of the coil spring is seated, a second high hardness section formed at a portion at which the coil spring wound in a spiral shape is spaced apart from the coil spring seating portion, and a low hardness section formed between the first and second high hardness sections.

A hardness of the low hardness layer and a hardness of the high hardness layer in the first and second high hardness sections may be formed in a range of 50 to 65 Shore D and a range of 55 to 70 Shore D, respectively, and a hardness of the low hardness layer and a hardness of the high hardness layer in the low hardness section may be formed in a range of 45 to 60 Shore D and a range of 55 to 65 Shore D, respectively.

A hardness of the pad may be increased within a range of 5 to 10 Shore D through a curing process.

A surface of the support may be an inclined surface formed to be inclined by 5 to 50° with respect to a virtual plane extending from ends of the inner and outer circumferences of the coil spring seating portion.

According to the invention, a method of manufacturing a bonded pad for a car suspension system coil spring, according to claim 10, is also provided.

### BRIEF DESCRIPTION OF THE DRAWINGS

The above and other objects, features and advantages of the present invention will become more apparent to those of ordinary skill in the art by describing in detail exemplary embodiments thereof with reference to the accompanying drawings, in which:
FIG. 1 is a view illustrating components and a coupling relationship in a car suspension system;
FIG. 2 is a view illustrating deformation due to compression or release of a coil spring and a position at which foreign materials are introduced between the coil spring and a pad according to the deformation when a suspension system operates;
FIGS. 3 and 4 are views illustrating a shape viewed from above and a cross-sectional structure of a pad according to an example not claimed;
FIG. 5 is a view illustrating a cross-sectional structure of a bonded pad into which a support panel according to the embodiment of the present invention is inserted;
FIG. 6 is a view illustrating a structure of the support panel according to the embodiment of the present invention;
FIG. 7 is a view illustrating positions of first and second high hardness sections and a low hardness section of the pad according to the embodiment of the present invention;
FIGS. 8 and 9 are views illustrating positions to which a concentrated load is applied when the coil spring is contracted due to operation of the suspension system; and
FIG. 10 is a view illustrating a position of an opening force generated between the coil spring and the pad due to a moment reverse phenomenon due to the concentrated load applied between the coil spring and the pad.

### DETAILED DESCRIPTION OF EXEMPLARY EMBODIMENTS

Hereinafter, embodiments of the present invention will be described with reference to the accompanying drawings.

The following descriptions will be made focusing on portions necessary to understand operations and actions according to the present invention.

While the embodiments of the present invention are described, descriptions of technical contents which are well-known in the art and not directly related to the present invention will be omitted.

This is to more clearly provide the gist of the present invention by omitting unnecessary descriptions that obscure the gist.

In addition, in descriptions of components of the present invention, a different reference numeral may be assigned to the same component depending on the drawings, and the same reference numeral may be assigned to the same component in different drawings.

However, this does not mean that the component has a different function depending on embodiments or that the component has the same function in different embodiments. A function of each component may be determined based on descriptions of each component in the corresponding embodiment.

In addition, unless otherwise defined, all technical terms used herein should be interpreted to have customary meanings to those skilled in the art to which this invention belongs, and should not be interpreted with overly idealized or reduced meanings. In addition, the singular forms "a," "an," and "the" used in the present specification are intended to include the plural forms as well, unless the context clearly indicates otherwise.

It should be interpreted that the terms "comprises," "comprising," "includes," and/or "including," when used herein, specify the presence of stated components or various operations thereof, may not include some components and operations therein, or may further include additional components and operations.

As illustrated in FIG. 1, in a bonded pad for a car suspension system coil spring according to an embodiment of the present invention, a pad 20 is installed on a strut seat 40 formed on an arm of the suspension system, and a coil spring 10 is bonded to the pad 20 using an adhesive.

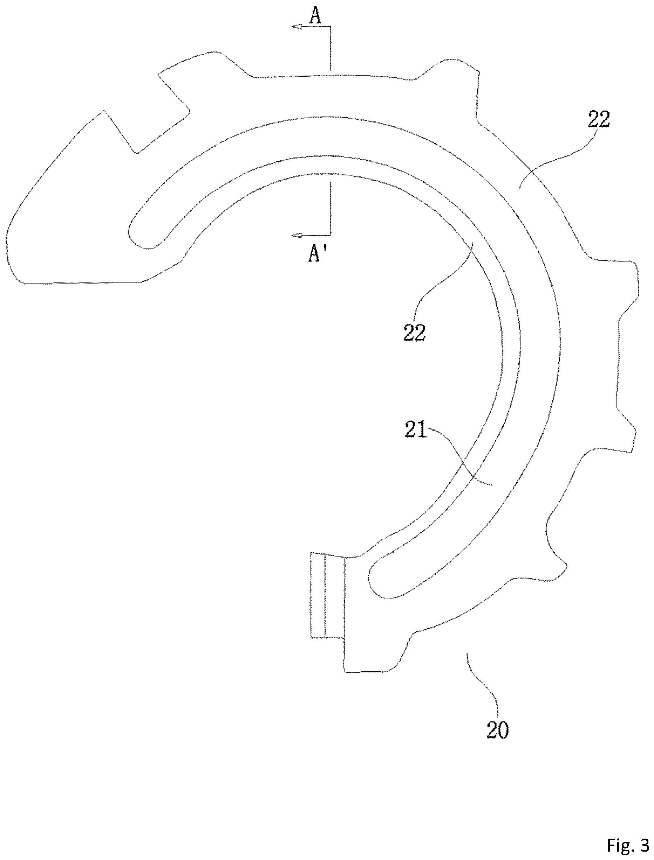

As illustrated in FIG. 3, a coil spring seating portion 21 in which a groove is formed to have the same shape as a shape of a surface of one end of a coil spring 10 is formed in the pad 20, wherein the coil spring 10 may be seated in the groove, the adhesive is applied on a surface of the coil spring seating portion 21, and the coil spring seating portion 21 is fixedly bonded to the coil spring 10.

In addition, a support 22 protrudes along inner and outer circumferences of the coil spring seating portion 21, and the bonded coil spring 10 is prevented from being separated from the coil spring seating portion 21 when the coil spring 10 is deformed due to operation of the suspension system.

A surface of the support 22 may be an inclined surface inclined by 5 to 50° with respect to a virtual plane extending from ends of the inner and outer circumferences of the coil spring seating portion 21 so that foreign materials, which are generated while a car travels and are accumulated on the pad 20, may be effectively discharged through the inclined surface.

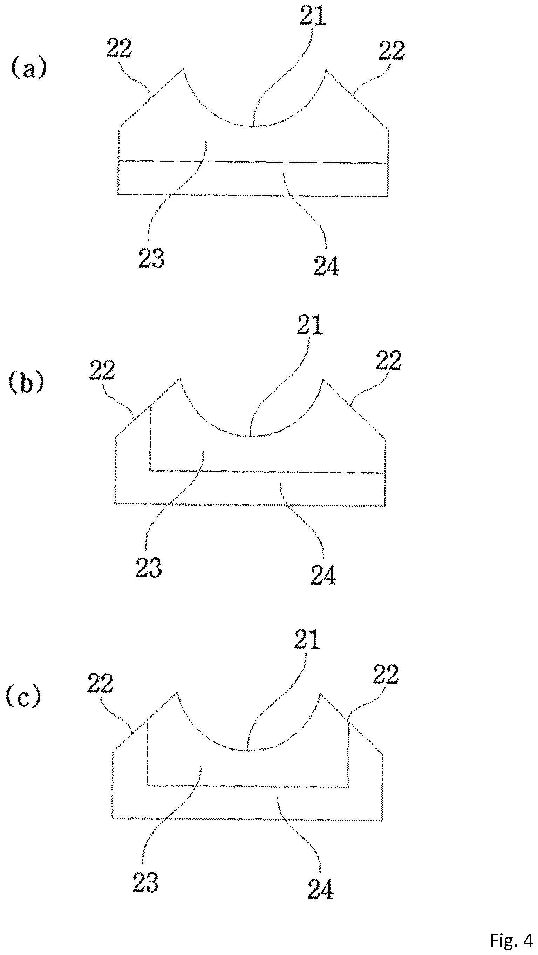

A cross-sectional structure of the pad 20 taken along line A-A' of FIG. 3 is illustrated in FIG. 4. As illustrated in FIG. 4, the pad 20 includes a low hardness layer 23 formed along an entire periphery or a partial section of the periphery of the coil spring seating portion 21 and a high hardness layer 24 having a higher hardness than the low hardness layer 23.

Since the low hardness layer 23 provides an elastically deformable property to the pad 20, when a tensile force is applied to an adhesive surface of the coil spring 10 and an adhesive surface of the pad 20 due to operation of the suspension system, the adhesive surface of the coil spring 10 and the boning surface of the pad 20 are prevented from being separated from each other, and dynamic characteristics such as impact absorption performance and ride comfort of the pad 20 are improved.

In addition, since strength of the pad 20 is improved due to the high hardness layer 24 so as to prevent excessive deformation of the pad 20 due to an external force applied from the coil spring 10 to the pad 20, foreign materials are prevented from being introduced between a contact surface of the pad 20 and a contact surface of the strut seat 40 so that the pad 20 or the strut seat 40 is prevented from being damaged.

In this case, as illustrated in FIG 4B or 4C, a part of the high hardness layer 24 protrudes along an outer or inner circumferential surface of the pad 20 toward the coil spring seating portion 21, and a cross section of the high hardness layer 24 may be an "L" or "U" shape.

In a case in which the high hardness layer 24 has such a shape, when a force is applied in an outward direction perpendicular to a screw axis of the coil spring 10 due to operation of the suspension system, the high hardness layer 24 protruding toward the coil spring seating portion 21 supports a side surface of the pad 20 to prevent excessive deformation of the pad 20.

In order to improve dynamic characteristics of the pad 20, before a curing process is performed, a hardness of the low hardness layer 23 may range from 45 to 65 Shore D, and in order to prevent excessive deformation of the pad 20 due to a force applied from the coil spring 10, the hardness of the high hardness layer 24 may range from 55 to 70 Shore D.

In addition, as illustrated in FIGS. 3 and 4, a mixed hardness layer in which a hardness is gradually changed may be formed at a boundary between the low hardness layer 23 and the high hardness layer 24 of the pad 20 formed as a single body.

In this case, in order to improve dynamic characteristics of the pad 20 and to prevent deformation of the pad 20, a thickness of the low hardness layer 23 may be formed within 30% or less of a thickness of the pad 20 at a central portion of the coil spring seating portion 21, a thickness of the high hardness layer 24 may be formed in a range of 35 to 45% of the thickness of the pad 20 at the central portion of the oil-spring seating portion 21, and a thickness of the mixed hardness layer may be formed in a range of 25 to 35% of the thickness of the pad 20.

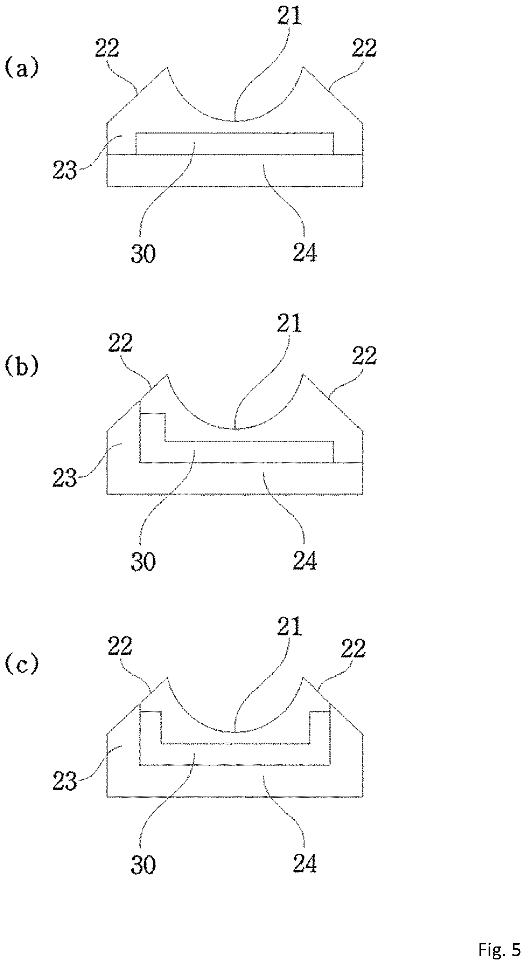

As illustrated in FIG. 5, a support panel 30 having a higher strength and a lower density than the high hardness layer 24 is inserted into the boundary between the low hardness layer 23 and the high hardness layer 24.

Since the support panel 30 may be formed of a resin such as plastic or a material such as a light alloy and has a lower weight relative to the same volume than the pad 20 typically formed of a material such as rubber, the pad 20 may be light, and a strength of the pad 20 may be increased due the high hardness layer 24 of the pad 20 so as to effectively prevent excessive deformation of the pad 20.

In addition, as illustrated in FIG. 5B or 5C, since the outer or inner circumferential surface of the support panel 30 is bent in a direction toward the coil spring seating portion 21, a cross section of the support panel 30 may have an "L" or "U" shape. When a force is applied in the outward direction perpendicular to the screw axis of the coil spring 10 due to operation of the suspension system, a portion of the support panel 30 protruding toward the coil spring seating portion 21 supports the side surface of the pad 20 to prevent excessive deformation of the pad 20.

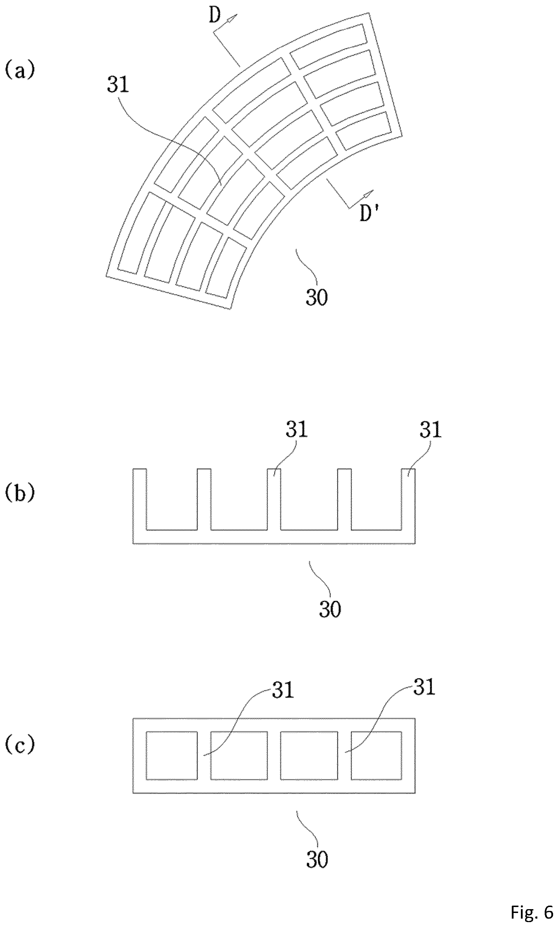

In addition, as illustrated in FIG. 6, ribs 31 protruding to have a grid shape may be formed on a surface of the support panel 30, and a strength of the support panel 30 may be further improved due to the ribs 31.

In addition, as illustrated in FIG. 6B, the ribs 31 may be formed on one side surface of the support panel 30, or as illustrated in FIG. 6C, may be formed to have the grid shape between two layers of the support panel 30.

Here, in a case in which the ribs 31 having the grid shape are formed between the two layers forming the support panel 30 provided as illustrated in FIG. 6C, an effect in which the manufactured pad 20 is light is improved due to spaces formed in the support panel 30.

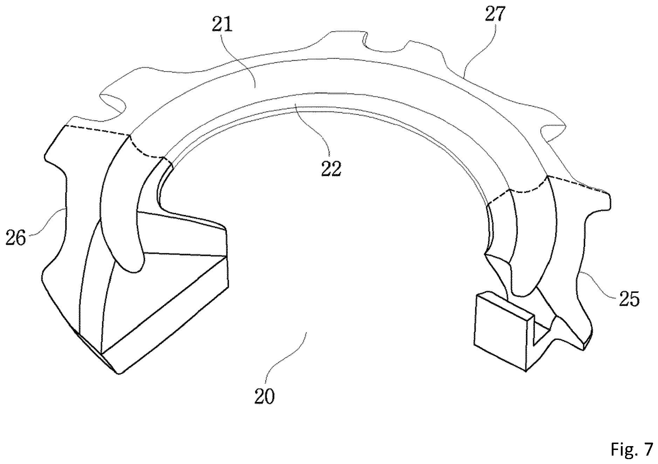

As illustrated in FIG. 7, the pad 20 includes a first high hardness section 25, a second high hardness section 26, and a low hardness section 27 which have different hardness in a winding direction of the coil spring 10.

The first high hardness section 25 is formed at a portion on which one side end portion of the coil spring 10 is seated, the second high hardness section 26 is formed at a portion at which the coil spring 10 wound in a spiral shape is spaced apart from the coil spring seating portion 21, and the low hardness section 27 is formed between the first and second high hardness sections 25 and 26.

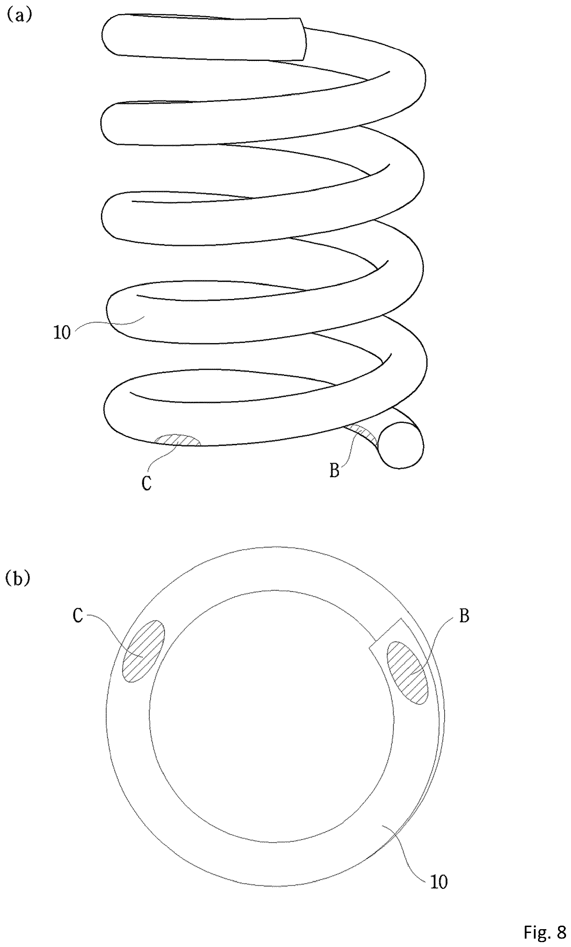

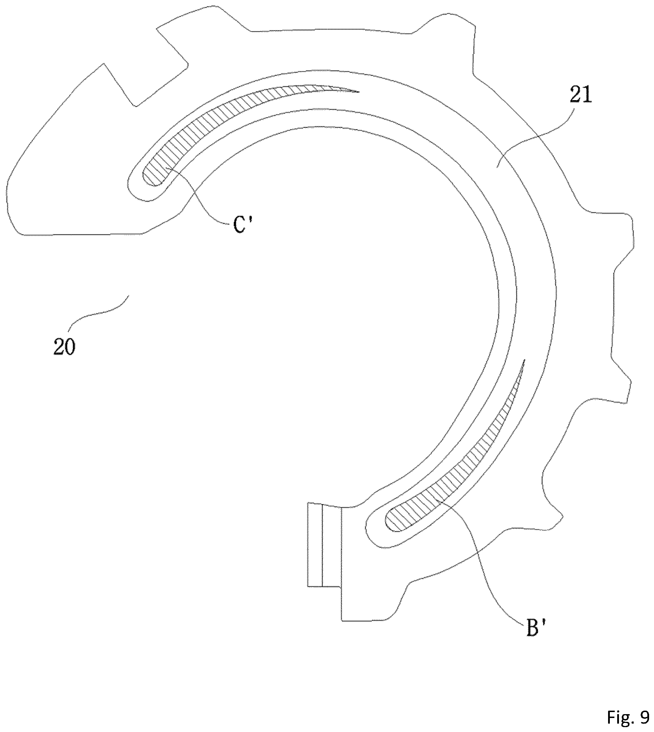

As illustrated in FIGS. 8 and 9, when the coil spring 10 is contracted due to operation of the suspension system of a car, concentrated loads are generated at an end portion B of the coil spring 10 and at a portion C from which the coil spring 10 starts to be separated from the coil spring seating portion 21, and the concentrated loads are applied to a portion B' and a portion C' of the surface of the coil spring seating portion 21 in contact with the portion B and the portion C.

Since a virtual line connecting the positions to which the concentrated loads are applied is separated from a spirally winding central portion of the coil spring 10, when the coil spring 10 is deformed, a moment is generated with respect to the spirally winding central portion so that an opening force is applied between the coil spring 10 and the coil spring seating portion 21.

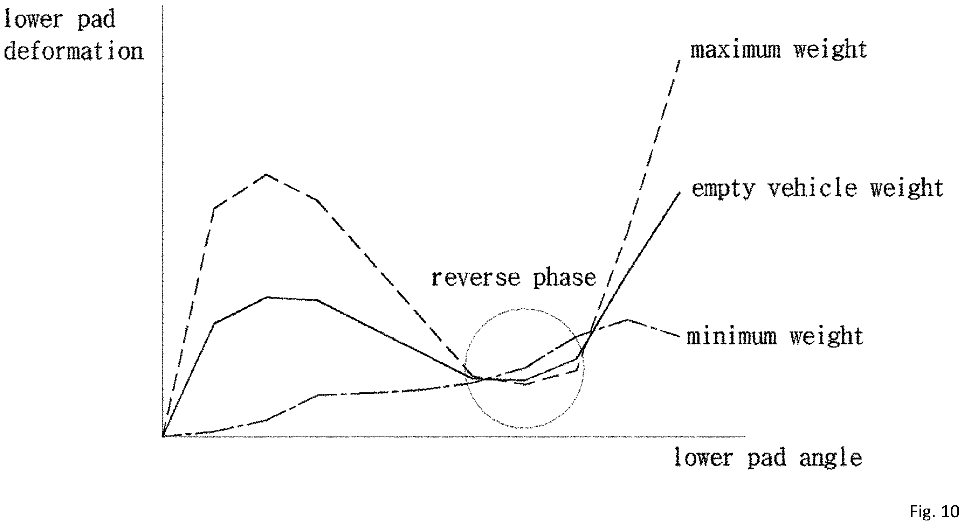

In addition, as illustrated in FIG. 10, when the moment is generated, a reverse phenomenon may occur in which a deformation extent of the pad 20 generated under a maximum load condition is greater than a deformation extent of the pad 20 generated under a minimum load condition.

When the reverse phenomenon occurs, a large opening force is applied between a contact surface of the coil spring 10 and the contact surface of the pad 20 even under the minimum load condition, and damage to the contact surface of the coil spring 10 and the contact surface of the pad 20 may be accelerated.

In this case, since the first and second high hardness sections 25 and 26 are formed at portions at which the portions B' and C' of the surface of the coil spring seating portion 21 are positioned, excessive deformation of the pad 20 due to the concentrated load is suppressed, and thus the moment generation is suppressed so that durability degradation of the adhesive surface of the coil spring 10 and the adhesive surface of the pad 20 can be prevented.

In addition, in order to effectively suppress the moment generated due to the deformation of the pad 20, the hardness of the low hardness layer 23 and the hardness of the high hardness layer 24 in the first and second high hardness sections 25 and 26 may be formed in a range of 50 to 65 Shore D and a range of 55 to 70 Shore D, respectively, and the hardness of the low hardness layer 23 and the hardness of the high hardness layer 24 in the low hardness section 27 may be formed in a range of 45 to 60 Shore D and a range of 55 to 65 Shore D, respectively.

When a process of bonding the pad 20, which is provided as described above, to the coil spring 10 is completed, a curing process of press-fitting the coil spring 10 seated on the coil spring seating portion 21 is additionally performed.

In the curing process, a hardness of the pad 20 is increased within a range of 5 to 10 Shore D, and thus dynamic characteristics and adhesive surface durability may be optimized through the increase in hardness of the pad 20 within the range of 5 to 10 Shore D.

Specifically, in the curing process, the coil spring 10 and the pad 20, which are bonded to each other through a process of bonding the coil spring 10 and the pad 20, are press fitted to secure a sufficient adhesive force, the coil spring seating portion 21 is contracted due to a pressure applied to the pad 20, and the adhesive surface of the pad 20 is hardened to prevent a change in dynamic characteristics such as impact absorption performance and ride comfort of the pad 20.

Here, in a case in which the hardness of the pad 20 is optimized before the curing process, since the coil spring seating portion 21 may be hardened due to a pressure generated in the process of bonding the pad 20 and the coil spring 10, the hardness of the pad 20 before the curing process is performed may be formed to be lower than an optimum value.

A method of manufacturing a bonded pad for a car suspension system coil spring according to an embodiment of the present invention will be described below.

A low hardness layer 23 is formed in a coil spring seating portion 21 and a high hardness layer 24 is formed in a support 22 so as to mold a pad 20 having various hardness.

An adhesive is applied on the coil spring seating portion 21 of the completely molded pad 20 to form an adhesive layer, and the coil spring 10 is disposed on the coil spring seating portion 21 on which the adhesive is applied.

When the coil spring 10 is completely disposed and bonded to the coil spring seating portion 21, a curing process of press-fitting the coil spring 10 to the coil spring seating portion 21 to improve a hardness of the pad 20 is additionally performed, and the curing process is performed by heating for ten minutes at a temperature of 190 °C, or the curing process is performed at room temperature.

In this case, in the process of molding the pad 20, a process of inserting a support panel 30 into the boundary between the low hardness layer 23 and the high hardness layer 24 may be additionally performed.

In addition, in the process of molding the pad 20, a process of forming first and second high hardness sections 25 and 26 and a low hardness section 27 may be additionally performed.

Although the embodiments of the present invention have been described with reference to the above contents, it will be understood by those skilled in the art that the invention may be performed in other specific forms without changing the technological scope or essential features.

Some of the benefits of the present invention are summarized below.

According to the embodiment of the present invention, since the low hardness layer is formed in the coil spring seating portion bonded to the coil spring, the coil spring seating portion is elastically deformed according to deformation of the coil spring so that the adhesive surface of the coil spring seating portion can be prevented from being separated from the adhesive surface of the being coil spring when the coil spring is tensioned due to operation of the suspension system, and since the high hardness layer is formed in the support supporting the coil spring bonded to the bonded pad, foreign materials can be prevented from being introduced between the pad and the strut seat when the coil spring is compressed to deform the support of the bonded pad.

Since the pad is formed to have a variable hardness, a surface pressure applied to the pad from the coil spring is uniform when the suspension system operates, permanent deformation of the pad due to a concentrated load can be prevented, and thus a phenomenon in which foreign materials are introduced between the pad and the strut seat due to the excessive deformation of the pad can be prevented.

Due to a support structure of the support panel inserted into the boundary between the high hardness layer and the low hardness layer, foreign materials can be more effectively prevented from being introduced between the pad and the strut seat when the pad is deformed due to operation of the suspension system.

Since a density of a material of the support panel is lower than a density of a material of the pad, the manufactured bonded pad can be light.

Since the high hardness sections are formed at a portion on which one side end portion of the coil spring, to which a concentrated load is applied, is seated when the coil spring is compressed due to operation of the suspension system and a portion at which the coil spring wound in a spiral shape is spaced apart from the coil spring seating portion, deformation of the pad due to the concentrated load and introduction of foreign materials between the pad and strut seat can be suppressed.

Through the curing process performed on an adhesive portion between the coil spring and the pad, an adhesive force and adhesion durability can be improved between the pad and the coil spring, and degradation of dynamic characteristics occurring when the pad is compressed and hardened can be prevented.

Therefore, the above-described embodiments should be considered in a descriptive sense only and not for purposes of limitation, and the scope of the present invention is defined by the appended claims.

## Claims

1. A coil spring and bonded pad for the car suspension system coil spring in which a coil spring seating portion (21) includes a groove, which has the same shape as a shape of a surface of one side end of the coil spring (10) such that the coil spring (10) of a car suspension system is seated, and a pad (20) is formed as a single body and includes a support (22) protruding along inner and outer circumferences of the coil spring seating portion (21) to prevent the coil spring (10) from being separated from the coil spring seating portion (21) so as to prevent damage to the coil spring (10) and generation of noise due to friction between the coil spring (10) and a strut seat (40),
wherein:
a low hardness layer (23) is formed along an entire periphery or a partial section of the periphery of the coil spring seating portion (21) of the pad (20);
a high hardness layer (24) is formed in the support (22) of the pad (20);
**characterized in that**
the pad (20) is fixedly bonded to the coil spring (10) using adhesive layers formed on a contact surface of the coil spring seating portion (21) and the coil spring (10);
a support panel (30) having a higher strength and a lower density than the high hardness layer (24) is inserted into a boundary between the low hardness layer (23) and the high hardness layer (24); and
the pad (20) includes:
a first high hardness section (25) formed at a portion on which one side end portion of the coil spring (10) is seated;
a second high hardness section (26) formed at a portion at which the coil spring (10) wound in a spiral shape is spaced apart from the coil spring seating portion (21); and
a low hardness section (27) formed between the first and second high hardness sections (25, 26).

2. The coil spring and bonded pad according to claim 1, wherein an outer or inner circumferential surface of the support panel (30) is bent in a direction toward the coil spring seating portion (21) so that a cross section of the support panel (30) has an "L" or "U" shape.

3. The coil spring and bonded pad according to claim 1, wherein ribs (31) having a grid shape are formed on one side surface or both side surfaces of the support panel (30) or are formed between two layers of the support panel (30).

4. The coil spring and bonded pad according to claim 1, wherein:
a hardness of the low hardness layer (23) is formed in a range of 45 to 65 Shore D; and
a hardness of the high hardness layer (24) is formed in a range of 55 to 70 Shore D.

5. The coil spring and bonded pad according to claim 1, wherein:
a thickness of the low hardness layer (23) is formed within 30% or less of a thickness of the pad (20) at a central portion of the coil spring seating portion (21);
a thickness of the high hardness layer (24) is formed in range of 35 to 45% of the thickness of the pad (20) at the central portion of the coil spring seating portion (21); and
a mixed hardness layer of which a hardness is gradually changed is formed at the boundary between the low hardness layer (23) and the high hardness layer (24), wherein a thickness of the mixed hardness layer ranges from 25 to 35% of the thickness of the pad.

6. The coil spring and bonded pad according to claim 1, wherein the high hardness layer (24) is bent along an outer or inner circumferential surface of the pad toward the coil spring seating portion (21) so that a cross section of the high hardness layer (24) has an "L" or "U" shape.

7. The coil spring and bonded pad according to claim 1, wherein:
a hardness of the low hardness layer (23) and a hardness of the high hardness layer (24) in the first and second high hardness sections (25, 26) are formed in a range of 50 to 65 Shore D and a range of 55 to 70 Shore D, respectively; and
a hardness of the low hardness layer (23) and a hardness of the high hardness layer (24) in the low hardness section (27) are formed in a range of 45 to 60 Shore D and a range of 55 to 65 Shore D, respectively.

8. The coil spring and bonded pad according to claim 1, wherein a hardness of the pad (20) is increased within a range of 5 to 10 Shore D through a curing process.

9. The coil spring and bonded pad according to claim 1, wherein a surface of the support (22) includes an inclined surface formed to be inclined by 5 to 50° with respect to a virtual plane extending from ends of the inner and outer circumferences of the coil spring seating portion (21).

10. A method of manufacturing a bonded pad for a car suspension system coil spring, wherein the bonded pad is a pad (20) that is formed as a single body and installed at an end of a coil spring (10) of a car suspension system to prevent damage to the coil spring (10) and generation of noise due to friction between the coil spring (10) and a strut seat (40), **characterized in that** the method comprises:
molding the pad (20) having various hardness such that a low hardness layer (23) having a range of 45 to 65 Shore D hardness is formed in a coil spring seating portion (21) bonded to the coil spring (10) and a high hardness layer (24) having a range of 55 to 70 Shore D hardness is formed in a support (22) supporting the coil spring seating portion (21);
applying an adhesive onto the coil spring seating portion (21) to form an adhesive layer; and
arranging the coil spring (10) on the coil spring seating portion (21) onto which the adhesive is applied,
performing a curing process of press-fitting the coil spring (10) seated on the coil spring seating portion (21) to increase the hardness of the pad (20) within a range of 5 to 10 Shore D and thus to optimize the adhesive surface durability;
wherein the molding of the pad (20) includes inserting a support panel (30) having a higher strength and a lower density than the high hardness layer into a boundary between the low hardness layer (23) and the high hardness layer (24).

11. The method according to claim 10, wherein the curing process is performed by heating for 10 or more minutes at a temperature of 190 °C or less or performed at room temperature.

12. The method according to claim 10, wherein the molding of the pad (20) further includes:
forming first and second high hardness sections (25, 26) at a portion on which an end portion of one side of the coil spring (10) is seated and a portion at which the coil spring (10) wound in a spiral shape is spaced apart from the coil spring seating portion (21), respectively; and
forming a low hardness section (27) having a relatively low hardness between the first and second high hardness sections (25, 26).

## Patentansprüche

1. Schraubenfeder und geklebte Unterlage für die Schraubenfeder des Fahrzeugaufhängungssytems, wobei ein Schraubenfedersitzabschnitt (21) eine Nut aufweist, welche die gleiche Form wie eine Form einer Oberfläche einer Endseite der Schraubenfeder (10) hat, so dass die Schraubenfeder (10) eines Fahrzeugaufhängungssytems in dieser sitzt, und eine Unterlage (20) als einzelner Körper gebildet ist und eine Stütze aufweist (22), die entlang des Innen- und Außenumfangs des Schraubenfedersitzabschnitts (21) vorsteht, um zu verhindern, dass sich die Schraubenfeder (10) von dem Schraubenfedersitzabschnitt (21) löst, um Schaden an der Schraubenfeder und Erzeugung von Lärm aufgrund von Reibung zwischen der Schraubenfeder (10) und einem Strebensitz (40) zu vermeiden,
wobei:
eine Schicht niedriger Härte (23) entlang eines Gesamtumfangs oder eines Teilabschnitts des Gesamtumfangs des Schraubenfedersitzabschnitts (21) der Unterlage (20) gebildet ist;
eine Schicht hoher Härte (24) in der Stütze (22) der Unterlage (20) gebildet ist;
**dadurch gekennzeichnet, dass**
die Unterlage (20) mithilfe von Haftschichten, die auf einer Kontaktoberfläche des Schraubenfedersitzabschnitts (21) und der Schraubenfeder (10) gebildet sind, fest an die Schraubenfeder (10) geklebt ist;
eine Trägerplatte (30), die eine höhere Festigkeit und eine niedrigere Dichte als die Schicht hoher Härte (24) aufweist, in einem Grenzbereich zwischen der Schicht niedriger Härte (23) und der Schicht hoher Härte (24) eingefügt ist; und
die Unterlage (20) aufweist:
einen ersten Teil hoher Härte (25), der an einem Abschnitt gebildet ist, an dem ein Seitenendabschnitt der Schraubenfeder (10) sitzt;
einen zweiten Teil hoher Härte (26), der an einem Abschnitt gebildet ist, an dem die spiralförmig gewickelte Schraubenfeder (10) von dem Schraubenfedersitzabschnitt (21) beabstandet ist; und
einen Teil niedriger Härte (27), der zwischen dem ersten und zweiten Teil hoher Härte (25, 26) gebildet ist.

2. Schraubenfeder und geklebte Unterlage nach Anspruch 1, wobei eine Außen- oder Innenumfangsoberfläche der Trägerplatte (30) in eine Richtung hin zum Schraubenfedersitzabschnitt (21) gebogen ist, so dass ein Querschnitt der Trägerplatte (30) "L"- oder "U"-förmig ist.

3. Schraubenfeder und geklebte Unterlage nach Anspruch 1, wobei Rippen (31) die eine Gitterform aufweisen, auf einer Seitenoberfläche oder beiden Seitenoberflächen der Trägerplatte (30) gebildet sind oder zwischen zwei Schichten der Trägerplatte (30) gebildet sind.

4. Schraubenfeder und geklebte Unterlage nach Anspruch 1, wobei:
eine Härte der Schicht niedriger Härte (23) in einem Bereich zwischen 45 bis 65 Shore-Härte D gebildet ist; und
eine Härte der Schicht hoher Härte (24) in einem Bereich zwischen 55 bis 70 Shore-Härte D gebildet ist.

5. Schraubenfeder und geklebte Unterlage nach Anspruch 1, wobei:
eine Dicke der Schicht niedriger Härte (23) innerhalb von 30% oder weniger einer Dicke der Unterlage (20) an einem mittleren Abschnitt des Schraubenfedersitzabschnitts (21) gebildet ist;
eine Dicke der Schicht hoher Härte (24) innerhalb eines Bereichs von 35% bis 45% der Dicke der Unterlage (20) an dem mittleren Abschnitt des Schraubenfedersitzabschnitts (21) gebildet ist; und
eine Schicht gemischter Härte, deren Härte schrittweise verändert wird, an dem Grenzbereich zwischen der Schicht niedriger Härte (23) und der Schicht hoher Härte (24) gebildet ist, wobei eine Dicke der Schicht gemischter Härte in einem Bereich zwischen 25 bis 35% der Dicke der Unterlage liegt.

6. Schraubenfeder und geklebte Unterlage nach Anspruch 1, wobei die Schicht hoher Härte (24) entlang einer Außen- oder Innenumfangsoberfläche der Unterlage zu dem Schraubenfedersitzabschnitt (21) gebogen ist, so dass ein Querschnitt der Schicht hoher Härte (24) "L"- oder "U"-förmig ist.

7. Schraubenfeder und geklebte Unterlage nach Anspruch 1, wobei:
eine Härte der Schicht niedriger Härte (23) und eine Härte der Schicht hoher Härte (24) in dem ersten und zweiten Teil hoher Härte (25, 26) in einem Bereich von 50 bis 65 Shore-Härte D bzw. einem Bereich von 55 bis 70 Shore-Härte D gebildet sind; und
eine Härte der Schicht niedriger Härte (23) und eine Härte der Schicht hoher Härte (24) in dem Teil niedriger Härte (27) in einem Bereich von 45 bis 60 Shore-Härte D bzw. einem Bereich von 55 bis 65 Shore-Härte D gebildet sind.

8. Schraubenfeder und geklebte Unterlage nach Anspruch 1, wobei eine Härte der Unterlage (20) durch einen Härtungsprozess im Bereich von 5 bis 10 Shore-Härte D erhöht wird.

9. Schraubenfeder und geklebte Unterlage nach Anspruch 1, wobei die Oberfläche der Stütze (22) eine geneigte Oberfläche aufweist, die gebildet ist, um in Bezug auf eine virtuelle Ebene 5 bis 50° geneigt zu sein, und sich von Enden des Innen- und Außenumfangs des Schraubenfedersitzabschnitts (21) erstreckt.

10. Verfahren zur Herstellung einer geklebten Unterlage für eine Schraubenfeder des Fahrzeugaufhängungssystems, wobei die geklebte Unterlage eine Unterlage (20) ist, die als einzelnes Gestell gebildet ist und an einem Ende einer Schraubenfeder (10) eines Fahrzeugaufhängungssystems installiert ist, um Schaden an der Schraubenfeder (10) und Erzeugung von Lärm aufgrund von Reibung zwischen der Schraubenfeder (10) und einem Strebensitz (40) zu vermeiden, **dadurch gekennzeichnet, dass** das Verfahren umfasst:
Formen der Unterlage (20), die verschiedene Härten hat, so dass eine Schicht niedriger Härte (23) mit einer Härte im Bereich von 45 bis 65 Shore-Härte D in einem Schraubenfedersitzabschnitt (21), der mit einer Schraubenfeder (10) verbunden ist, gebildet wird, und eine Schicht hoher Härte (24) mit einer Härte im Bereich von 55 bis 70 Shore-Härte D in einer Stütze (22), die den Schraubenfedersitzabschnitt (21) stützt, gebildet wird;
Auftragen eines Haftvermittlers auf den Schraubenfedersitzabschnitt (21), um eine Haftschicht zu bilden; und
Anordnen der Schraubenfeder (10) auf dem Schraubenfedersitzabschnitt (21), auf den der Haftvermittler aufgetragen wurde,
Durchführen eines Härtungsprozesses mittels Presspassung der Schraubenfeder (10), die auf den Schraubenfedersitzabschnitt (21) aufgesetzt ist, um die Härte der Unterlage (20) innerhalb eines Bereichs von 5 bis 10 Shore-Härte D zu erhöhen und somit das Zeitstandverhalten der Haftschichtoberfläche zu optimieren;
wobei das Formen der Unterlage (20) das Einführen einer Trägerplatte (30), die eine höhere Festigkeit und eine niedrigere Dichte hat als die Schicht hoher Härte, in eine Begrenzung zwischen der Schicht niedriger Härte (23) und der Schicht hoher Härte (24) umfasst.

11. Verfahren nach Anspruch 10, wobei der Härtungsprozess durch Erhitzen für 10 Minuten oder mehr bei einer Temperatur von 190° oder weniger oder bei Zimmertemperatur durchgeführt wird.

12. Verfahren nach Anspruch 10, wobei das Formen der Unterlage (20) ferner umfasst:
Bilden erster und zweiter Teile hoher Härte (25, 26) an einem Abschnitt, an dem ein Seitenendabschnitt einer Schraubenfeder (10) sitzt, bzw. einem Abschnitt, an dem die spiralförmig gewickelte Schraubenfeder (10) von dem Schraubenfedersitzabschnitt (21) beabstandet ist; und
Bilden eines Teils niedriger Härte (27) mit einer relativ niedrigen Härte zwischen dem ersten und zweiten Teil hoher Härte (25, 26).

## Revendications

1. Ressort hélicoïdal et coussinet lié pour le ressort hélicoïdal d'un système de suspension de voiture dans lesquels une partie de siège de ressort hélicoïdal (21) inclut une rainure, qui a la même forme qu'une forme d'une surface d'une extrémité latérale du ressort hélicoïdal (10) de telle sorte que le ressort hélicoïdal (10) d'un système de suspension de voiture est assis, et un coussinet (20) est formé sous la forme d'un corps unique et inclut un support (22) faisant saillie le long de circonférences interne et externe de la partie de siège de ressort hélicoïdal (21) pour empêcher le ressort hélicoïdal (10) d'être séparé de la partie de siège de ressort hélicoïdal (21) afin d'empêcher l'endommagement du ressort hélicoïdal (10) et la génération de bruit due au frottement entre le ressort hélicoïdal (10) et un siège de jambe de force (40),
dans lesquels :
une couche de faible dureté (23) est formée le long de toute une périphérie ou d'une section partielle de la périphérie de la partie de siège de ressort hélicoïdal (21) du coussinet (20) ;
une couche de dureté élevée (24) est formée dans le support (22) du coussinet (20) ;
**caractérisés en ce que**
le coussinet (20) est lié de manière fixe au ressort hélicoïdal (10) en utilisant des couches adhésives formées sur une surface de contact de la partie de siège de ressort hélicoïdal (21) et le ressort hélicoïdal (10) ;
un panneau de support (30) ayant une résistance plus élevée et une densité plus faible que la couche de dureté élevée (24) est inséré dans une démarcation entre la couche de faible dureté (23) et la couche de dureté élevée (24) ; et
le coussinet (20) inclut :
une première section de dureté élevée (25) formée au niveau d'une partie sur laquelle une partie d'extrémité latérale du ressort hélicoïdal (10) est assise ;
une deuxième section de dureté élevée (26) formée au niveau d'une partie sur laquelle le ressort hélicoïdal (11) enroulé en forme de spirale est espacé de la partie de siège de ressort hélicoïdal (21) ; et
une section de faible dureté (27) formée entre les première et deuxième sections de dureté élevée (25, 26).

2. Ressort hélicoïdal et coussinet lié selon la revendication 1, dans lesquels une surface circonférentielle externe ou interne du panneau de support (30) est courbée dans une direction vers la partie de siège de ressort hélicoïdal (21) de telle sorte qu'une section transversale du panneau de support (30) a une forme en « L » ou en « U ».

3. Ressort hélicoïdal et coussinet lié selon la revendication 1, dans lesquels des nervures (31) ayant une forme de grille sont formées sur une surface latérale ou les deux surfaces latérales du panneau de support (30) ou sont formées entre deux couches du panneau de support (30).

4. Ressort hélicoïdal et coussinet lié selon la revendication 1, dans lesquels :
une dureté de la couche de faible dureté (23) est formée dans une plage allant de 45 à 65 Shore D ; et
une dureté de la couche de dureté élevée (24) est formée dans une plage allant de 55 à 70 Shore D.

5. Ressort hélicoïdal et coussinet lié selon la revendication 1, dans lesquels :
une épaisseur de la couche de faible dureté (23) est formée dans les démarcations de 30 % ou moins d'une épaisseur du coussinet (20) au niveau d'une partie centrale de la partie de siège de ressort hélicoïdal (21) ;
une épaisseur de la couche de dureté élevée (24) est formée dans une plage allant de 35 à 45 % de l'épaisseur du coussinet (20) au niveau de la partie centrale de la partie de siège de ressort hélicoïdal (21) ; et
une couche de dureté mixte dont une dureté est graduellement modifiée est formée au niveau de la démarcation entre la couche de faible dureté (23) et la couche de dureté élevée (24), une épaisseur de la couche de dureté mixte allant de 25 à 35 % de l'épaisseur du coussinet.

6. Ressort hélicoïdal et coussinet lié selon la revendication 1, dans lesquels la couche de dureté élevée (24) est courbée le long d'une surface circonférentielle externe ou interne du coussinet vers la partie de siège de ressort hélicoïdal (21) de telle sorte qu'une section transversale de la couche de dureté élevée (24) a une forme en « L » ou en « U ».

7. Ressort hélicoïdal et coussinet lié selon la revendication 1, dans lesquels :
une dureté de la couche de faible dureté (23) et une dureté de la couche de dureté élevée (24) dans les première et deuxième sections de dureté élevée (25, 26) sont formées respectivement dans une plage allant de 50 à 65 Shore D et dans une plage allant de 55 à 70 Shore D ; et
une dureté de la couche de faible dureté (23) et une dureté de la couche de dureté élevée (24) dans la section de faible dureté (27) sont formées respectivement dans une plage allant de 45 à 60 Shore D et dans une plage allant de 55 à 65 Shore D.

8. Ressort hélicoïdal et coussinet lié selon la revendication 1, dans lesquels la dureté du coussinet (20) est augmentée dans les démarcations d'une plage allant de 5 à 10 Shore D par un processus de durcissement.

9. Ressort hélicoïdal et coussinet lié selon la revendication 1, dans lesquels une surface du support (22) inclut une surface inclinée formée pour être inclinée de 5 à 50° par rapport à un plan virtuel s'étendant à partir d'extrémités des circonférences interne et externe de la partie de siège de ressort hélicoïdal (21).

10. Procédé de fabrication d'un coussinet lié pour un ressort hélicoïdal de système de suspension de voiture, dans lequel le coussinet lié est un coussinet (20) qui est formé sous la forme d'un corps unique et installé à une extrémité d'un ressort hélicoïdal (10) d'un système de suspension de voiture pour empêcher l'endommagement du ressort hélicoïdal (10) et la génération de bruit due au frottement entre le ressort hélicoïdal (10) et un siège de jambe de force (40), **caractérisé en ce que** le procédé comprend :
le moulage du coussinet (20) ayant diverses duretés de telle sorte qu'une couche de faible dureté (23) ayant une plage de dureté Shore D allant de 45 à 65 est formée dans une partie de siège de ressort hélicoïdal (21) liée au ressort hélicoïdal (10) et une couche de dureté élevée (24) ayant une plage de dureté Shore D allant de 55 à 70 est formée dans un support (22) supportant la partie de siège de ressort hélicoïdal (21) ;
l'application d'un adhésif sur la partie de siège de ressort hélicoïdal (21) pour former une couche adhésive ; et
l'agencement du ressort hélicoïdal (10) sur la partie de siège de ressort hélicoïdal (21) sur laquelle l'adhésif est appliqué,
la réalisation d'un processus de durcissement d'emmanchement à la presse du ressort hélicoïdal (10) assis sur la partie de siège de ressort hélicoïdal (21) pour augmenter la dureté du coussinet (20) dans les démarcations d'une plage allant de 5 à 10 Shore D et ainsi optimiser la durabilité de la surface adhésive ;
le moulage du coussinet (20) incluant l'insertion d'un panneau de support (30) ayant une résistance plus élevée et une densité plus faible que la couche de dureté élevée dans une démarcation entre la couche de faible dureté (23) et la couche de dureté élevée (24).

11. Procédé selon la revendication 10, dans lequel le processus de durcissement est réalisé par chauffage pendant 10 minutes ou plus à une température de 190 °C ou moins ou est réalisé à température ambiante.

12. Procédé selon la revendication 10, dans lequel le moulage du coussinet (20) inclut en outre :
la formation de première et deuxième sections de dureté élevée (25, 26) respectivement au niveau d'une partie sur laquelle une partie d'extrémité d'un côté du ressort hélicoïdal (10) est assise et d'une partie au niveau de laquelle le ressort hélicoïdal (10) enroulé en forme de spirale est espacé de la partie d'assise de ressort hélicoïdal (21) ; et
la formation d'une section de faible dureté (27) ayant une dureté relativement faible entre les première et deuxième sections de dureté élevée (25, 26).
